# EUROPEAN PATENT SPECIFICATION

(11) **EP 4 019 351 B1**
(45) Date of publication and mention of the grant of the patent: **01.10.2025**
(21) Application number: 21208728.2
(22) Date of filing: 17.11.2021
(51) Int. Cl.: B60W 30/06, B60W 50/02, B62D 15/02, G01C 21/34, G05D 1/00, B60W 30/165

(54) **VEHICLE CONTROL METHOD AND DEVICE, VEHICLE AND STORAGE MEDIUM**
VERFAHREN UND VORRICHTUNG ZUR FAHRZEUGSTEUERUNG, FAHRZEUG UND SPEICHERMEDIUM
PROCÉDÉ ET DISPOSITIF DE COMMANDE DE VÉHICULE, VÉHICULE ET SUPPORT D'INFORMATIONS

(30) Priority: 28.12.2020 CN 202011606175
(43) Date of publication of application: 29.06.2022
(73) Proprietor: Guangzhou Xiaopeng Autopilot Technology Co., Ltd., Guangzhou, Guangdong 510640 (CN)
(72) Inventor: LI, Wei, Guangzhou (CN)
(74) Representative: Yip, Matthew Wing Yu

(56) References cited:
- GB-A- 2 524 393
- US-A1- 2017 090 480

## Description

### Field of Invention

The present invention relates to the technical field of vehicles, and in particular to a vehicle control method and device, a vehicle and a storage medium.

### Background

Thanks to automation technology, artificial intelligence technology, global positioning system (GPS) technology, radar scanning visual computing and the like, autonomous driving promotes autonomous and safe driving of any vehicle without manual control, and greatly liberates drivers from heavy dependence on energy, physical strength, experience and intelligence in long-distance driving after reaching the advanced stage, bringing the incomparable driving experience.

To date, there are still numerous difficulties to be resolved for autonomous driving. For example, sensing systems of vehicles still have difficult to timely and accurately sense the external conditions or abnormity due to factors such as environment, circuit faults or external interference in unmanned driving process. In cases that the above-mentioned sensing systems fail, it is common to control autonomous driving vehicles to brake based on external environment memorized at the previous moment. However, the above-mentioned measure cannot cope with complex road environments or ensure safety of users and properties in the vehicles.

US 2017/090480 A1 discusses an autonomous vehicle that is operable to follow a primary trajectory that forms a portion of a route. While controlling the autonomous vehicle, the autonomous vehicle calculates a failsafe trajectory to follow as a response to a predetermined type of event.

### Summary of Invention

In view of the above-mentioned problems, embodiments of the present invention are proposed to provide a vehicle control method, a corresponding vehicle control device, a vehicle and a storage medium that overcome the above-mentioned problems or at least partially solve the above-mentioned problems. In accordance with the present invention, there are provided a vehicle control method as recited by claim 1, a vehicle control device as recited by claim 7, a vehicle as recited by claim 13 and a computer readable storage medium as recited by claim 14; preferred features are set out in the dependent claims. Any embodiments and aspects referred to and not falling within the scope of the claims are examples included to assist understanding of the invention.

The embodiments of the present invention include the following advantages:
a first vehicle position of a first vehicle and a second vehicle position of a second vehicle adjacent the first vehicle are acquired, a parking path is determined according to the first vehicle position, the second vehicle is determined as a first target vehicle when the second vehicle position of the second vehicle is acquired, first ambient information of the first target vehicle is acquired, and the first vehicle is controlled to follow the first target vehicle to travel according to the parking path and the first ambient information. In the embodiments of the present invention, the parking path and the first ambient information of the first target vehicle are acquired, and the vehicle is controlled to follow the first target vehicle to travel based on the parking path and the first ambient information, thereby controlling the vehicle to continue traveling safely in the event that a sensing system of the vehicle fails, and ensuring safety of life and property in the vehicle.

### Brief Description of Drawings

Fig. 1 is a flow chart of steps of one embodiment of a vehicle control method of the present invention;
Fig. 2 is a flow chart of steps of another embodiment of a vehicle control method of the present invention;
Fig. 3 is a schematic diagram of a vehicle control flow (top) of the present invention;
Fig. 4 is a schematic diagram of a vehicle control flow (middle) of the present invention;
Fig. 5 is a schematic diagram of a vehicle control flow (bottom) of the present invention; and
Fig. 6 is a structural block diagram of one embodiment of a vehicle control device of the present invention.

### Detailed Description

To make the objectives, features, and advantages mentioned above of the present invention more apparent and easily understood, the present invention will be described in detail below with reference to the drawings and particular implementations.

Autonomous driving of a vehicle utilizes a sensing system of the vehicle, such as various in-vehicle sensors (such as radars, ultrasonic sensors, cameras, etc.) to sense the environment around the vehicle, control the steering and speed of the vehicle, and dynamically plan travelling paths according to real-time road conditions, thereby achieving autonomous, safe and reliable driving of the vehicle. However, the sensing system of the vehicle may not always accurately and timely sense the exterior of the vehicle or abnormity due to factors of environmental conditions, circuit faults, external interference, etc. during the course of autonomous driving. In the event that the above-mentioned sensing system fails, it is common to control the vehicle to brake based on the external environment information memorized at the previous moment. However, the above-mentioned measure may not cope with complex road environments properly or ensure safety of life and property in the vehicle.

In view of the above-mentioned problems, the present invention provides a vehicle control method after the sensing system fails while the vehicle is autonomously driven on an expressway.

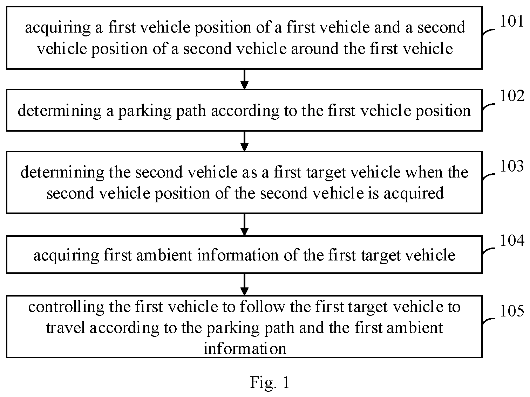

Fig. 1 illustrates a flow chart of a vehicle control method of the present invention. In the embodiment of the present invention, the method may specifically include the following steps:
Step 101: acquiring a first vehicle position of a first vehicle and a second vehicle position of a second vehicle adjacent the first vehicle.

The first vehicle and the second vehicle are both provided with global positioning systems (GPSs) and magnetic compasses. After an external environment sensing system of the vehicle fails, positioning and navigation may be carried out on a high definition map according to the GPS and the magnetic compass, the first vehicle and the second vehicle may carry out real-time communication via a network, and the first vehicle position/the second vehicle position is positioning information on the high definition map.

Specifically, after an external sensing system of the first vehicle fails due to factors of an environment, a circuit fault, external interference, etc., the first vehicle may be positioned on the high definition map according to the GPS and the magnetic compass to acquire the positioning information of the first vehicle on the high definition map, and positioning information of the second vehicle on the high definition map may be acquired according to network communication between the first vehicle and the second vehicle at the same time.

Step 102: determining a parking path according to the first vehicle position.

Specifically, after the external environment sensing system of the vehicle fails and the positioning information of the first vehicle on the high definition map is acquired, a parking path with the shortest course is planned on the high definition map according to the positioning information.

Step 103: determining the second vehicle as a first target vehicle when the second vehicle position of the second vehicle is acquired.

Specifically, after the external environment sensing system of the vehicle fails and the positioning information of the first vehicle on the high definition map is acquired, second vehicle position of the second vehicle adjacent the first vehicle may be acquired. If the second vehicle position is acquired successfully, the second vehicle is determined as the first target vehicle and is followed by the first vehicle.

Step 104: acquiring first ambient information of the first target vehicle.

The first ambient information is external environment information sensed by the sensing system of the target vehicle.

Specifically, if the external sensing system of the first vehicle fails, the vehicle may not travel safely. Accordingly, after the external environment sensing system of the first vehicle fails and the first target vehicle is determined, the first ambient information perceived by an external sensing system of the second vehicle is acquired, and the first vehicle may continue traveling safely according to the first ambient information.

Step 105: controlling the first vehicle to follow the first target vehicle to travel according to the parking path and the first ambient information.

Specifically, after the first vehicle acquires the first ambient information of the second vehicle, the vehicle is controlled to follow the target vehicle to travel along a parking path based on the determined parking path and the acquired first ambient information.

Therefore, in the embodiment of the present invention, the first vehicle position of the first vehicle and the second vehicle position of the second vehicle adjacent the first vehicle are acquired, the parking path is determined according to the first vehicle position, the second vehicle is determined as the first target vehicle when the second vehicle position of the second vehicle is acquired, the first ambient information of the first target vehicle is acquired, and the first vehicle is controlled to follow the first target vehicle to travel according to the parking path and the first ambient information. In the embodiment, the parking path and the first ambient information of the first target vehicle are acquired, and the vehicle is controlled to follow the first target vehicle to travel based on the parking path and the first ambient information, thereby controlling the vehicle to continue traveling to a parking area safely in the event that a sensing system of the vehicle fails, and ensuring life and property safety of the vehicle.

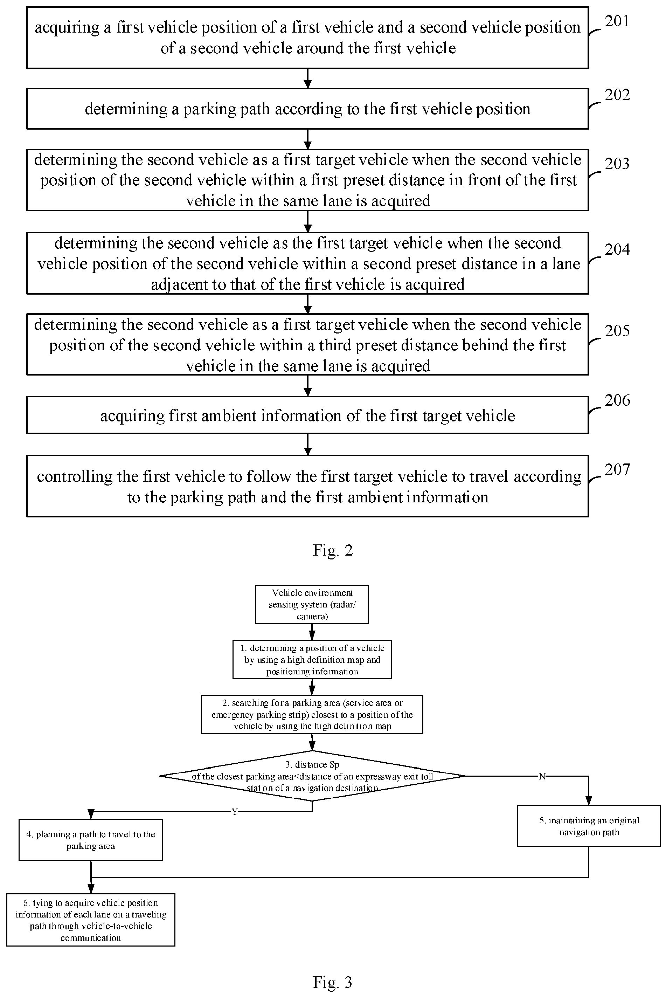

Fig. 2 illustrates a flow chart of another embodiment of a vehicle control method of the present invention. In the embodiment of the present invention, the method specifically includes the following steps:
Step 201: acquiring a first vehicle position of a first vehicle and a second vehicle position of a second vehicle adjacent the first vehicle.
Step 202: determining a parking path according to the first vehicle position.
Step 202 includes: acquiring a parking area position closest to the first vehicle and location of an expressway exit; determining whether a distance between the first vehicle and the parking area is greater than or equal to a distance between the first vehicle and the expressway exit; acquiring an original navigation path as a parking path when the distance between the first vehicle and the parking area is greater than or equal to the distance between the first vehicle and the expressway exit; and planning the parking path between the first vehicle and the parking area when the distance between the first vehicle and the parking area is less than the distance between the first vehicle and the expressway exit.

When the vehicle travels in an expressway, the parking area may be a service area or an emergency parking area for the vehicle to park. In an alternative aspect of the present disclosure, the vehicle may travel out of the expressway and then search for a parking area outside the expressway.

Specifically, after an external environment sensing system of the first vehicle fails and positioning information of the first vehicle on a high definition map is acquired, the service area or the emergency parking area on the expressway and the expressway exit are searched on the high definition map according to the positioning information. It is then determined whether the distance between the first vehicle and the parking area is greater than or equal to the distance between the first vehicle and the expressway exit. If the distance between the first vehicle and the parking area is greater than or equal to the distance between the first vehicle and the expressway exit, the navigation path of the first vehicle before the external environment sensing system fails is acquired as the parking path. When the first vehicle travels to the expressway exit, a parking path to a parking area outside the expressway is planned according to the expressway exit position. If the distance between the first vehicle and the parking area is less than the distance between the first vehicle and the expressway exit, the parking path is planned according to the positioning information of the first vehicle on the high definition map and the service area or emergency parking area.

In the embodiment of the present invention, the parking area position on the expressway is compared with the expressway exit position, thereby allowing quick determination of the parking area position closest to the first vehicle, and ensuring that the first vehicle may reach the parking area position in the shortest time and is out of danger.

Step 203: determining the second vehicle as a first target vehicle when the second vehicle position of the second vehicle within a first preset distance in front of the first vehicle in the same lane is acquired.

Specifically, after the external environment sensing system of the vehicle fails and the positioning information of the first vehicle on the high definition map is acquired, an attempt to acquire the second vehicle position within the first preset distance in front of the lane of the first vehicle is made. If the second vehicle position is acquired successfully, the second vehicle is determined as the first target vehicle and is followed.

Step 204: determining the second vehicle as the first target vehicle when the second vehicle position of the second vehicle within a second preset distance in a lane adjacent to that of the first vehicle is acquired.

Specifically, after the second vehicle position within the first preset distance in front of the lane of the first vehicle is unsuccessfully acquired, an attempt to acquire the second vehicle position of the second vehicle within the second preset distance in the lane adjacent to that of the first vehicle is made. If the second vehicle position is acquired successfully, the second vehicle is determined as the first target vehicle and is followed.

Step 205: determining the second vehicle as a first target vehicle when the second vehicle position of the second vehicle within a third preset distance behind the first vehicle in the same lane is acquired.

Specifically, after the second vehicle position of the second vehicle within the second preset distance in the lane adjacent to that of the first vehicle is not successfully acquired, an attempt to acquire the second vehicle position of the second vehicle within the third preset distance behind the first vehicle in the same lane is made. If the second vehicle position is acquired successfully, the second vehicle is determined as the first target vehicle and is followed.

In one embodiment of the present invention, after the determining the second vehicle as a first target vehicle when the second vehicle position of the second vehicle is acquired, the method further includes: controlling the first vehicle to continue traveling for preset time when the second vehicle position of the second vehicle is not acquired; determining the second vehicle as the first target vehicle when the second vehicle position of the second vehicle is acquired within the preset time; and controlling the first vehicle to park when the second vehicle position of the second vehicle is not acquired within the preset time.

Specifically, when the second vehicle adjacent the first vehicle is not acquired, it is indicated that there is no other vehicle adjacent the first vehicle, ambient information sensed before an external sensing system of the first vehicle fails is acquired, the vehicle is controlled to travel for the preset time according to the above-mentioned ambient information, and an attempt to acquire the second vehicle position of the second vehicle within the preset time is made. If the second vehicle position of the second vehicle is acquired, the second vehicle is determined as the first target vehicle, and if the second vehicle position of the second vehicle is not acquired, the first vehicle is controlled to turn on a warning light and is parked on this vehicle lane.

In one embodiment of the present invention, after the first target vehicle is determined, a failure condition of the sensing system of the first vehicle is sent to the first target vehicle through real-time network communication between the first vehicle and the second vehicle, and the first target vehicle is requested to lead the first vehicle to travel to the parking area for parking.

In the embodiment of the present invention, the failure condition of the sensing system of the first vehicle is sent to the first target vehicle, and the first target vehicle is requested to lead the first vehicle to travel to the parking area for parking, such that the first vehicle may travel to the parking area only by following the first target vehicle without changing lanes to follow other vehicles, thereby reducing the number of lane changes and reducing traveling risks of the vehicle.

Step 206: acquiring first ambient information of the first target vehicle.

Step 207: controlling the first vehicle to follow the first target vehicle to travel according to the parking path and the first ambient information.

In one embodiment of the present invention, the step 207 includes: controlling the first vehicle to follow the first target vehicle to travel based on the parking path and the first ambient information when the first target vehicle is the second vehicle within the first preset distance in front of the first vehicle in the same lane.

Specifically, after the first vehicle acquires the second vehicle position which is within the first preset distance and in front of the first vehicle in the same lane and the second vehicle on the same lane is taken as the first target vehicle, the first vehicle may be directly controlled to travel following the first target vehicle according to the parking path and the first ambient information since the first target vehicle is in front of the first vehicle.

In one embodiment of the present invention, the step 207 includes: determining whether the first target vehicle travels in front of the first vehicle when the first target vehicle is the second vehicle within the second preset distance in a lane adjacent to that of the first vehicle; if the first target vehicle travels in front of the first vehicle, planning a lane-changing path for the first vehicle to travel to a position right behind the first target vehicle based on the first vehicle position, the second vehicle position and the first ambient information, controlling the first vehicle to travel to a position right behind the first target vehicle, and controlling the first vehicle to follow the first target vehicle according to the lane-changing path; if the first target vehicle travels behind the first vehicle or is parallel to the first vehicle, controlling the first vehicle to decelerate to a position behind the first target vehicle, planning the lane-changing path for the first vehicle to travel to the position right behind the first target vehicle based on the first vehicle position, the second vehicle position and the first ambient information; controlling the first vehicle to travel to the position right behind the first target vehicle, and controlling the first vehicle to follow the first target vehicle according to the lane-changing path.

Specifically, after the first vehicle acquires the second vehicle position of the second vehicle within the second preset distance in the adjacent lane and the second vehicle on the adjacent lane is taken as the first target vehicle, it is then determined whether the first target vehicle is travelling in front of the first vehicle.

If the first target vehicle is travelling in front of the first vehicle, the lane-changing path for the first vehicle to travel to the position right behind the first target vehicle is planned according to the first vehicle position, the second vehicle position and the first ambient information, and the first vehicle is controlled to travel to the position right behind the first target vehicle and to follow the first target vehicle according to the lane-changing path. If the first target vehicle is travelling behind the first vehicle or is parallel to the first vehicle, the first vehicle is controlled to decelerate to the position behind the first target vehicle and the lane-changing path for the first vehicle to travel to the position right behind the first target vehicle is planned according to the first vehicle position, the second vehicle position and the first ambient information, and the first vehicle is controlled to travel to the position right behind the first target vehicle and to follow the first target vehicle according to the lane-changing path.

In one embodiment of the present invention, step 207 includes: if the first target vehicle is the second vehicle within the third preset distance behind the first vehicle in the same lane, planning the lane-changing path for the first vehicle to travel to the adjacent lane based on the first vehicle position, the second vehicle position and the first ambient information, and controlling the first vehicle to travel to the adjacent lane according to the lane-changing path; and controlling the first vehicle to decelerate to the position behind the first target vehicle, planning the lane-changing path for the first vehicle to travel to the position right behind the first target vehicle based on the first vehicle position, the second vehicle position and the first ambient information, controlling the first vehicle to travel to the position right behind the first target vehicle, and controlling the first vehicle to follow the first target vehicle according to the lane-changing path.

Specifically, after the first vehicle acquires the second vehicle position of the second vehicle within the third preset distance behind the second vehicle in the same lane, and the second vehicle in the same lane is taken as the first target vehicle, the lane-changing path for the first vehicle to travel to the adjacent lane is planned based on the first vehicle position, the second vehicle position and the first ambient information, the first vehicle is controlled to travel to the adjacent lane according to the lane-changing path, then the vehicle is controlled to decelerate to the position behind the first target vehicle, the lane-changing path for the first vehicle to travel to the position right behind the first target vehicle is planned based on the first vehicle position, the second vehicle position and the first ambient information, and the first vehicle is controlled to travel to the position right behind the first target vehicle and to follow the first target vehicle according to the lane-changing path.

In one embodiment of the present invention, the step 207 includes: determining whether there is an obstacle in front of the first vehicle based on the first ambient information; planning an avoidance path for the first vehicle to avoid the obstacle, and controlling the first vehicle to avoid the obstacle according to the avoidance path when there is the obstacle in front of the first vehicle; and taking a traveling track of the first target vehicle as the avoidance path, and controlling the first vehicle to avoid the obstacle according to the avoidance path when the planning fails.

Specifically, in a process that the first vehicle follows the first target vehicle to travel, whether there is an obstacle in front of the first vehicle is determined based on the acquired first ambient information. If there is no obstacle, the first vehicle continues to follow the first target vehicle to travel; if there is any obstacle in front of the first vehicle, the avoidance path for avoiding the obstacle is planned according to a position of the obstacle, and the first vehicle is controlled to avoid the obstacle according to the avoidance path; and if the planning fails, the traveling track of the first target vehicle is acquired as the avoidance path, and the first vehicle is controlled to avoid the obstacle by following the avoidance path.

In the embodiment of the present invention, the first vehicle may identify the obstacle in front of the first vehicle according to the acquired first ambient information of the first target vehicle, and plan the avoidance path or acquire the avoidance path (traveling track) of the first target vehicle to avoid the obstacle, thereby ensuring safe traveling of the first vehicle.

In one embodiment of the present invention, step 207 further includes: determining whether the first vehicle is traveling in a designated lane when the distance between the first vehicle position and the parking area position is less than or equal to a fourth preset distance; and controlling the first vehicle to continue to follow the first target vehicle and controlling the first vehicle to decelerate to a first preset speed when the first vehicle travels in the designated lane.

The designated lane leading to the parking area exists at or within a certain distance from the parking area position, the service area, or the emergency parking area in the expressway.

Specifically, whether the first vehicle is traveling in the designated lane is determined when a distance between the first vehicle position and the parking area position is less than or equal to the fourth preset distance. If the first vehicle is traveling in the designated lane, which suggests that the first target vehicle is also travelling to the parking area position, the first vehicle is controlled to continue to follow the first target vehicle and to decelerate to the first preset speed.

In one embodiment of the present invention, after the determining whether the first vehicle is traveling in a designated lane when the distance between the first vehicle position and the parking area position is less than or equal to a fourth preset distance, the method further includes: acquiring a third vehicle position of the second vehicle, and determining the second vehicle as a second target vehicle when the first vehicle is not traveling in the designated lane; and acquiring second ambient information of the second target vehicle, and controlling the first vehicle to follow the second target vehicle to gradually change to the designated lane and controlling the first vehicle to decelerate to the first preset speed according to the first vehicle position, the third vehicle position and the second ambient information.

Specifically, it is determined that the first vehicle is traveling in the designated lane leading to the parking area when the distance between the first vehicle position and the parking area position is less than or equal to the fourth preset distance. If the first vehicle is not traveling in the designated lane, which indicates that the first target vehicle is not traveling to the parking area position, the first vehicle is controlled to acquire the third vehicle position of the second vehicle anew. The second vehicle is determined as the second target vehicle, which is travelling to the parking area position. Second ambient information of the second target vehicle is acquired. A lane-changing path for the first vehicle to travel to the position right behind the second target vehicle is planned according to the first vehicle position, the third vehicle position and the second ambient information. The first vehicle is controlled to travel to the position right behind the second target vehicle on the designated lane, and to decelerate to the first preset speed at the same time.

In the embodiment of the present invention, when it is determined that the first target vehicle followed by the first vehicle is not traveling to the parking area position according to the parking path, the second target vehicle traveling to the parking area position is determined anew, and the first vehicle follows the target vehicle to travel, thereby ensuring that the first vehicle may reach the parking area position and is out of danger in the shortest time.

In one embodiment of the present invention, step 207 further includes: controlling the first vehicle to decelerate to a second preset speed when the distance between the first vehicle position and the parking area position is less than or equal to a fifth preset distance; and controlling the first vehicle to decelerate to park when the first vehicle position reaches the parking area position.

Specifically, when the distance between the first vehicle position and the parking area position is less than or equal to the fifth preset distance, which indicates that the vehicle has been close to the parking area position, the first vehicle is controlled to decelerate to the second preset speed and to park within a parking range when the first vehicle reaches the parking area position.

In one embodiment of the present invention, after the sensing system of the first vehicle fails, a driver in the first vehicle is notified so that the driver can manually drive the first vehicle.

Specifically, after the external sensing system of the first vehicle fails, if there is the driver in the first vehicle, the driver in the vehicle is notified within a certain time, and the driver can then control the first vehicle to continue traveling.

To sum up, in the embodiment of the present invention, the first vehicle position of the first vehicle and the second vehicle position of the second vehicle adjacent the first vehicle are acquired, the parking path is determined according to the first vehicle position. The second vehicle is determined as the first target vehicle when the second vehicle position of the second vehicle within the first preset distance in front of the first vehicle in the the same lane is acquired. The second vehicle is determined as the first target vehicle when the second vehicle position of the second vehicle within the second preset distance in a lane adjacent to that of the first vehicle is acquired. The second vehicle is determined as the first target vehicle when the second vehicle position of the second vehicle within the third preset distance behind the first vehicle in the same lane is acquired. The first ambient information of the first target vehicle is acquired, and the first vehicle is controlled to follow the first target vehicle to travel according to the parking path and the first ambient information. In the embodiment of the present invention, the parking path and the first ambient information of the first target vehicle are acquired, and the vehicle is controlled to follow the first target vehicle based on the parking path and the first ambient information, thereby controlling the vehicle to continue travelling safely in the event that a sensing system of the vehicle fails, and ensuring life and property safety of the vehicle.

In the embodiment of the present invention, the failure condition of the sensing system of the first vehicle is sent to the first target vehicle, and the first target vehicle is requested to lead the first vehicle to travel to the parking area for parking, such that the first vehicle may travel to the parking area for parking only by following the first target vehicle without changing lanes to follow other vehicles, thereby reducing the number of lane changes, and reducing travel risks of the vehicle.

In the embodiment of the present invention, the first vehicle may identify an obstacle in front of the first vehicle according to the acquired first ambient information of the first target vehicle, and plan an avoidance path or acquire an avoidance path (traveling track) of the first target vehicle to avoid the obstacle, thereby ensuring safe traveling of the first vehicle.

In the embodiment of the present invention, when it is determined that the first target vehicle followed by the first vehicle is not traveling to the parking area position according to the parking path, the second target vehicle traveling to the parking area position is determined anew, and the first vehicle follows the second target vehicle to travel, thereby ensuring that the first vehicle may reach the parking area position and is out of danger in the shortest time.

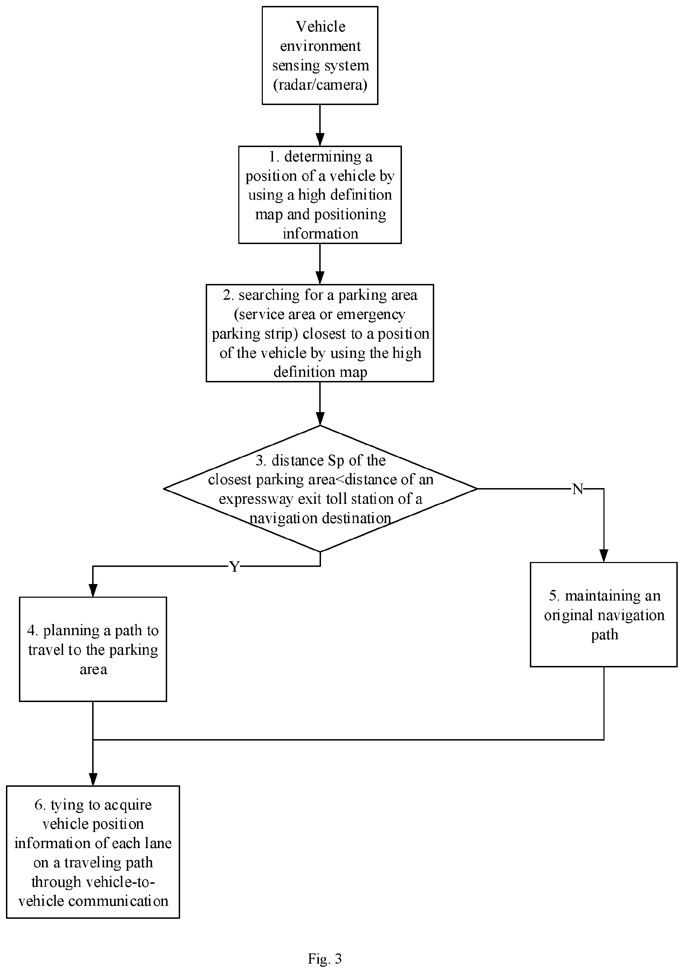

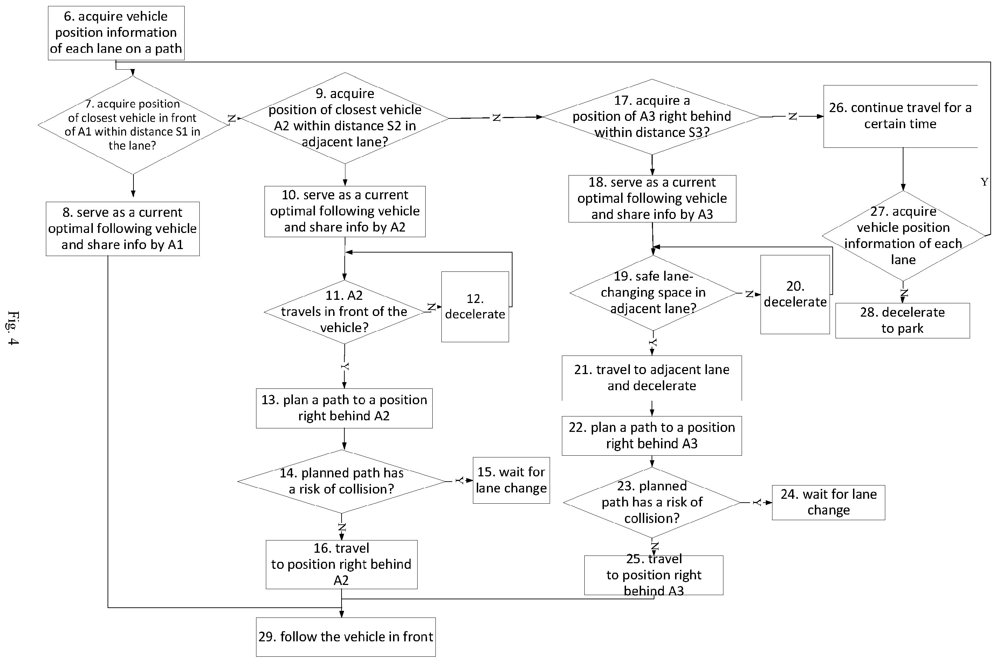

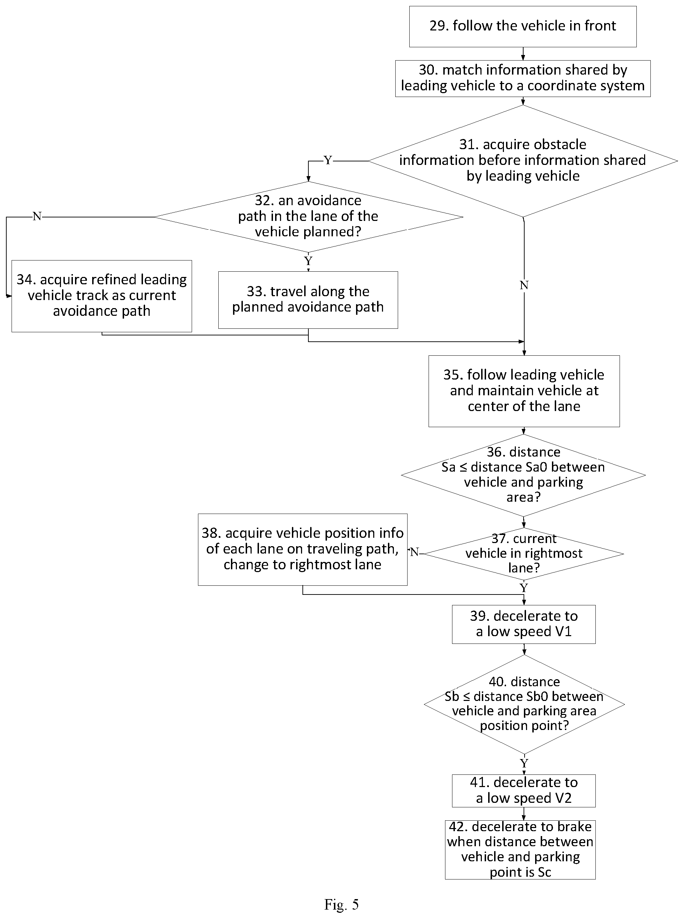

In order to allow better understanding of the embodiment of the present invention, schematic diagrams of a vehicle control flow (top) (middle) (bottom) of the present invention are shown in Figs. 3, 4 and 5. In the embodiment of the present invention, the method specifically includes the following steps:
after an environment sensing system of a vehicle fails,
Step 1: determining a position of the vehicle by using a high definition map and positioning information;
Step 2: searching for a parking area (service area or emergency parking area) closest to a position of the vehicle and an expressway exit toll station by using the high definition map;
Step 3: determining whether a distance Sp of the closest parking area is less than a distance of the expressway exit toll station of a navigation destination, and
if so, proceeding to step 4, and
if not, proceeding to step 5;
Step 4: planning a parking path to travel to the parking area according to the position of the vehicle and the closest parking area;
Step 5: maintaining an original navigation path as the parking path;
Step 6: trying to acquire vehicle position information of each lane on a traveling path through vehicle-to-vehicle communication;
Step 7: acquiring a position of the closest vehicle in the front A1 within a forward distance S1 of a lane of the vehicle, and
if the position is successfully acquired, proceeding to step 8, and
if the position is unsuccessfully acquired, proceeding to step 9;
Step 8: serving as a current optimal following vehicle and sharing information of a sensing system by A1;
Step 9: acquiring a position of the closest vehicle A2 within a distance S2 of an adjacent lane, and
if the position is successfully acquired, proceeding to step 10, and
if the position is unsuccessfully acquired, proceeding to step 17;
Step 10: serving as a current optimal following vehicle and sharing information of a sensing system by A2;
Step 11: determining whether A2 travels in front of the vehicle, and
if so, proceeding to step 13, and
if not, proceeding to step 12;
Step 12: comfortably decelerating to a position behind A2 by the vehicle;
Step 13: planning a path to travel to a position right behind A2;
Step 14: determining whether the planned path has a risk of collision with a surrounding vehicle, and
if so, proceeding to step 15, and
if not, proceeding to step 16;
Step 15: waiting for lane change;
Step 16: traveling to the position right behind A2 according to the planned path;
Step 17: acquiring a position of a vehicle A3 right behind the vehicle within a distance S3 of the lane of the vehicle, and
if the position is successfully acquired, proceeding to step 18, and
if not, proceeding to step 26;
Step 18: serving as a current optimal following vehicle and sharing information of a sensing system by A3;
Step 19: determining whether there is a safe lane-changing space in an adjacent lane, and
if so, proceeding to step 21, and
if not, proceeding to step 20;
Step 20: comfortably decelerating by the vehicle;
Step 21: temporarily traveling to the adjacent lane, and comfortably decelerating;
Step 22: planning a path to travel into a position right behind A3;
Step 23: determining whether the planned path has a risk of collision with a surrounding vehicle, and
if so, proceeding to step 24, and
if not, proceeding to step 25;
Step 24: waiting for lane change;
Step 25: traveling to the position right behind A3 according to the planned path;
Step 26: controlling the vehicle to continue traveling for a certain time according to the information of the sensing system detected before the sensing system fails;
Step 27: trying to acquire the vehicle position information of each lane on the traveling path within a certain time, and
if the vehicle position information is successfully acquired, proceeding to the step 7, and
if the vehicle position information is unsuccessfully acquired, proceeding to step 28;
Step 28: controlling the vehicle to decelerate to park;
Step 29: controlling the vehicle to follow the vehicle in the front to travel through comfortable acceleration and deceleration;
Step 30: matching the information of the sensing system shared by the vehicle in the front to a coordinate system of the lane of the vehicle;
Step 31: acquiring obstacle information of construction facilities, stopped vehicles, etc. in front of the vehicle in advance from the information of the sensing system shared by the vehicle in the front, and
if there is an obstacle in front of the vehicle, proceeding to step 32, and
if there is no obstacle in front of the vehicle, proceeding to step 35;
Step 32: determining whether an avoidance path in the lane of the vehicle is planned according to shared position information of the obstacle of the sensing system, and
if the avoidance path is planned, proceeding to step 33, and
if the avoidance path is not planned, proceeding to step 34;
Step 33: traveling according to the planned avoidance path of the lane of the vehicle;
Step 34: acquiring a refined vehicle in the front track in real time, and tracking the track to serve as a current avoidance path according to position coordinate change information of the vehicle in the front;
Step 35: stably following the vehicle in the front to travel in a longitudinal direction, and maintaining the vehicle at a center position of the lane of the vehicle acquired from the high definition map in a transverse direction;
Step 36: when a distance Sa≤Sa0 between the vehicle and a parking area turnoff (ramp/emergency parking area);
Step 37: determining whether the current vehicle is in the rightmost lane, and
if the current vehicle is in the rightmost lane, proceeding to step 39, and
if the current vehicle is not in the rightmost lane, proceeding to step 38;
Step 38: trying to acquire the vehicle position information of each lane on the traveling path again through vehicle-vehicle communication to replace a following vehicle, and gradually change to the rightmost lane;
Step 39: comfortably decelerating to a low speed V1 for stable traveling;
Step 40: when a distance Sb≤Sb0 between the vehicle and a parking area position point (service area ramp/emergency parking area);
Step 41: controlling the vehicle to comfortably decelerate to a low speed V2; and
Step 42: controlling the vehicle to comfortably decelerate to brake when a distance between the vehicle and a parking point is Sc.

In the embodiment of the present invention, after the sensing system of the vehicle fails, the following vehicle is determined and information of the sensing system is shared by acquiring the position of the vehicle and the positions of the surrounding vehicle, and the vehicle is controlled to follow the vehicle in the front to continue traveling safely, thereby ensuring life and property safety of the vehicle.

It should be noted that although the described embodiment of the present invention applies to an expressway scene, the invention may be similarly applied to road scenes of urban roads, national roads, county roads, etc.

It should be noted that method embodiments are expressed as combinations of a series of actions merely for simplicity of description. Those skilled in the art would appreciate that the present invention is not limited by the order of the actions described as some steps may be performed in other orders or concurrently in accordance with the embodiments of the present invention. It should also be understood by those skilled in the art that the embodiments described in the description are only preferred embodiments, and some steps involved in these embodiments are not necessarily required by the present invention, as defined by the appended claims.

Fig. 6 illustrates a structural block diagram of one embodiment of a vehicle control device of the present invention. In the embodiment of the present invention, the device may specifically include the following modules:
a vehicle position acquisition module 601, configured to acquire a first vehicle position of a first vehicle and a second vehicle position of a second vehicle adjacent the first vehicle;
a parking path determination module 602, configured to determine a parking path according to the first vehicle position;
a first target vehicle determination module 603, configured to determine the second vehicle as a first target vehicle when the second vehicle position of the second vehicle is acquired;
an ambient information acquisition module 604, configured to acquire first ambient information of the first target vehicle; and
a first target vehicle following module 605, configured to control the first vehicle to follow the first target vehicle to travel according to the parking path and the first ambient information. In one embodiment of the present invention, the parking path determination module 602 includes:
   a position acquisition sub-module, configured to acquire a parking area position closest to the first vehicle and an expressway exit position;
   a distance determination sub-module, configured to determine whether a distance between the first vehicle position and the parking area position is greater than or equal to a distance between the first vehicle position and the expressway exit position;
   a path acquisition sub-module, configured to acquire an original navigation path as the parking path when the distance between the first vehicle position and the parking area position is greater than or equal to the distance between the first vehicle position and the expressway exit position; and
   a path planning sub-module, configured to plan the parking path between the first vehicle position and the parking area position when the distance between the first vehicle position and the parking area position is less than the distance between the first vehicle position and the expressway exit position.

In one embodiment of the present invention, the first target vehicle determination module 603 includes:
a first target vehicle determination sub-module, configured to determine the second vehicle as the first target vehicle when the second vehicle position of the second vehicle within a first preset distance in front of the first vehicle in the same lane is acquired;
a second target vehicle determination sub-module, configured to determine the second vehicle as the first target vehicle when the second vehicle position of the second vehicle within a second preset distance in a lane adjacent to that of the first vehicle is acquired; and
a third target vehicle determination sub-module, configured to determine the second vehicle as the first target vehicle when the second vehicle position of the second vehicle within a third preset distance behind the first vehicle in the same lane is acquired.

In one embodiment of the present invention, the first target vehicle following module 605 includes:
a vehicle direction determination sub-module, configured to determine whether the first target vehicle travels in front of the first vehicle when the first target vehicle is the second vehicle within the second preset distance in the lane adjacent to that of the first vehicle;
a first lane-changing path planning sub-module, configured to plan a lane-changing path for the first vehicle to travel to a position right behind the first target vehicle according to the first vehicle position, the second vehicle position and the first ambient information, and control the first vehicle to travel to the position right behind the first target vehicle and control the first vehicle to follow the first target vehicle to travel according to the lane-changing path when the first target vehicle travels in front of the first vehicle; and
a second lane-changing path planning sub-module, configured to control the first vehicle to decelerate to a position behind the first target vehicle, plan the lane-changing path for the first vehicle to travel to the position right behind the first target vehicle according to the first vehicle position, the second vehicle position and the first ambient information, and control the first vehicle to travel to the position right behind the first target vehicle and control the first vehicle to follow the first target vehicle to travel according to the lane-changing path when the first target vehicle travels behind the first vehicle or is parallel to the first vehicle.

In one embodiment of the present invention, the first target vehicle following module 605 includes:
a third lane-changing path planning sub-module, configured to plan a lane-changing path for the first vehicle to travel to the adjacent lane according to the first vehicle position, the second vehicle position and the first ambient information, and control the first vehicle to travel to the adjacent lane according to the lane-changing path when the first target vehicle is the second vehicle within the third preset distance behind the first vehicle in the same lane; and
a fourth lane-changing path planning sub-module, configured to control the first vehicle to decelerate to the position behind the first target vehicle, plan the lane-changing path for the first vehicle to travel to the position right behind the first target vehicle according to the first vehicle position, the second vehicle position and the first ambient information, and control the first vehicle to travel to the position right behind the first target vehicle and control the first vehicle to follow the first target vehicle to travel according to the lane-changing path.

In one embodiment of the present invention, the first target vehicle following module 605 includes:
an obstacle determination sub-module, configured to determine whether there is an obstacle in front of the first vehicle based on the first ambient information;
an avoidance path planning sub-module, configured to plan an avoidance path for the first vehicle to avoid the obstacle, and control the first vehicle to avoid the obstacle according to the avoidance path when there is the obstacle in front of the first vehicle; and
an avoidance path acquisition sub-module, configured to take a traveling track of the first target vehicle as the avoidance path, and control the first vehicle to avoid the obstacle according to the avoidance path when the avoidance path planning fails.

In one embodiment of the present invention, the first target vehicle following module 605 includes:
a vehicle position determination sub-module, configured to determine whether the first vehicle is traveling in a designated lane when a distance between the first vehicle position and the parking area position is less than or equal to a fourth preset distance; and
a first target vehicle following sub-module, configured to control the first vehicle to continue to follow the first target vehicle and to control the first vehicle to decelerate to a first preset speed when the first vehicle travels in the designated lane.

In one embodiment of the present invention, the device further includes:
a fourth target vehicle determination sub-module, configured to acquire a third vehicle position of the second vehicle, and determine the second vehicle as the second target vehicle when the first vehicle is not traveling in the designated lane; and
a vehicle lane-changing sub-module, configured to acquire second ambient information of the second target vehicle, and control the first vehicle to follow the second target vehicle to gradually change to the designated lane and control the first vehicle to decelerate to the first preset speed according to the first vehicle position, the third vehicle position and the second ambient information.

In one embodiment of the present invention, the first target vehicle following module 605 includes:
a vehicle deceleration sub-module, configured to control the first vehicle to decelerate to a second preset speed when the distance between the first vehicle position and the parking area position is less than or equal to a fifth preset distance; and
a vehicle parking sub-module, configured to control the first vehicle to decelerate to park when the first vehicle position reaches the parking area position.

In one embodiment of the present invention, the device further includes:
a vehicle control module, configured to control the first vehicle to continue traveling for preset time when the second vehicle position of the second vehicle is not acquired;
a second target vehicle determination module, configured to determine the second vehicle as the first target vehicle when the second vehicle position of the second vehicle is acquired within the preset time; and
a vehicle parking module, configured to control the first vehicle to park when the second vehicle position of the second vehicle is not acquired within the preset time.

To sum up, in the embodiment of the present invention, the first vehicle position of the first vehicle and the second vehicle position of the second vehicle adjacent the first vehicle are acquired, the parking path is determined according to the first vehicle position, the second vehicle is determined as the first target vehicle when the second vehicle position of the second vehicle is acquired, the first ambient information of the first target vehicle is acquired, and the first vehicle is controlled to follow the first target vehicle to travel according to the parking path and the first ambient information. In the embodiment of the present invention, the parking path and the first ambient information of the first target vehicle are acquired, and the vehicle is controlled to follow the first target vehicle based on the parking path and the first ambient information, thereby controlling the vehicle to continue traveling safely in a case that a sensing system of the vehicle fails, and ensuring life and property safety of the vehicle.

Since the embodiment of the device is basically similar to the embodiment of the method, its description is relatively simple, and relevant contents may be seen from partial description of the embodiment of the method.

The embodiment of the present invention discloses a vehicle. The vehicle includes a processor, a memory and a computer program that is stored on the memory and may run on the processor, where the computer program, when executed by the processor, results in performance of the steps of the embodiment of the above-mentioned vehicle control method.

The embodiment of the present invention discloses a computer readable storage medium. The computer readable storage medium stores a computer program, and the computer program, when executed by a processor, results in performance of the steps of the embodiment of the above-mentioned vehicle control method.

Each embodiment of the description is described in a progressive manner, each embodiment focuses on the differences from other embodiments, and the same and similar parts between the embodiments may refer to each other.

Those skilled in the art should understand that the embodiments of the present invention may be provided as a method, a device, or a computer program product. Therefore, the embodiments of the present invention may take the form of hardware only embodiments, software only embodiments, or embodiments with a combination of software and hardware. Moreover, the embodiments of the present invention may take the form of a computer program product that is implemented on one or more computer-usable storage media (including but not limited to a disk memory, a CD-ROM, an optical memory, etc.) that include computer-usable program codes.

The embodiments of the present invention are described with reference to the flow charts and/or block diagrams of the method, a terminal device (system), and the computer program product according to the embodiments of the present invention. It should be understood that each flow and/or block in the flow charts and/or block diagrams and combinations of the flows and/or blocks in the flow charts and/or block diagrams may be implemented by computer program instructions. These computer program instructions may be provided for a general-purpose computer, a special-purpose computer, an embedded processor, or a processor of another programmable data processing terminal device to generate a machine, such that the instructions executed by a computer or a processor of another programmable data processing terminal device generate an apparatus for implementing a specific function in one or more processes in the flow charts and/or in one or more blocks in the block diagrams.

These computer program instructions may be stored in a computer readable memory that may instruct the computer or another programmable data processing terminal device to work in a specific manner, such that the instructions stored in the computer readable memory generate an artifact that includes an instruction apparatus. The instruction apparatus implements a specific function in one or more processes in the flow charts and/or in one or more blocks in the block diagrams.

These computer program instructions may be loaded onto a computer or another programmable data processing terminal device, such that a series of operations and steps are executed on the computer or another programmable terminal device, thereby generating computer-implemented processing. Therefore, the instructions executed on the computer or another programmable terminal device provide steps for implementing a specific function in one or more processes in the flow charts and/or in one or more blocks in the block diagrams.

Finally, it should be noted that relational terms herein such as first and second are only used to distinguish one entity or operation from another entity or operation without necessarily requiring or implying any actual such relationship or order between such entities or operations.

Moreover, terms "include", "contain", or any other variations thereof are intended to cover non-exclusive inclusions, such that a process, a method, an article, or a terminal device including a series of elements not only includes those elements, but also includes other elements that are not explicitly listed, or also includes inherent elements of the process, the method, the article, or the terminal device. Without more restrictions, the elements defined by the sentence "including a..." do not exclude the existence of other identical elements in the process, method, article, or terminal device including the elements.

The vehicle control method, a vehicle control device, the vehicle and the storage medium provided in the present invention are introduced in detail above. Specific embodiments are used herein for illustration of the principles and implementations of the present disclosure. The description of the above-mentioned embodiments is merely used to help understand the method and its core concept of the present disclosure. In addition, a common person skilled in the art may make modifications to the specific implementations and application scope in accordance with the invention as defined by the appended claims.

## Claims

1. A vehicle control method after a sensing system of a first vehicle fails while the first vehicle is autonomously driven on an expressway, comprising:
acquiring (101, 201) a first vehicle position of the first vehicle and a second vehicle position of a second vehicle adjacent the first vehicle;
determining (102, 202) a parking path according to the first vehicle position;
determining (103) the second vehicle as a first target vehicle when the second vehicle position of the second vehicle is acquired;
acquiring (104, 206) first ambient information of the first target vehicle; and
controlling (105, 207) the first vehicle to follow the first target vehicle to travel according to the parking path and the first ambient information;
wherein said determining a parking path according to the first vehicle position comprises:
acquiring a parking area position closest to the first vehicle and an expressway exit position;
determining whether a distance between the first vehicle position and the parking area position is greater than or equal to a distance between the first vehicle position and the expressway exit position;
acquiring an original navigation path as the parking path when the distance between the first vehicle position and the parking area position is greater than or equal to the distance between the first vehicle position and the expressway exit position; and
planning the parking path between the first vehicle position and the parking area position when the distance between the first vehicle position and the parking area position is less than the distance between the first vehicle position and the expressway exit position.

2. The method according to claim 1, wherein said determining (103) the second vehicle as a first target vehicle when the second vehicle position of the second vehicle is acquired comprises:
determining (203) the second vehicle as the first target vehicle, when the second vehicle position of the second vehicle is acquired within a first preset distance in front of the first vehicle in the same lane;
if the second vehicle position of the second vehicle is not successfully acquired within the first preset distance in front of the first vehicle in the same lane, determining (204) the second vehicle as the first target vehicle, when the second vehicle position of the second vehicle is acquired within a second preset distance in a lane adjacent to that of the first vehicle; and
if the second vehicle position of the second vehicle is not successfully acquired within the second preset distance in a lane adjacent to that of the first vehicle, determining (205) the second vehicle as the first target vehicle, when the second vehicle position of the second vehicle is acquired within a third preset distance behind the first vehicle in the same lane.

3. The method according to claim 1, wherein said controlling the first vehicle to follow the first target vehicle to travel according to the parking path and the first ambient information comprises:
determining whether there is an obstacle in front of the first vehicle based on the first ambient information;
planning an avoidance path for the first vehicle to avoid the obstacle, and controlling the first vehicle to avoid the obstacle according to the avoidance path when there is an obstacle in front of the first vehicle; and
taking a traveling track of the first target vehicle as an avoidance path, and controlling the first vehicle to avoid the obstacle according to the avoidance path when said planning fails.

4. The method according to claim 1, wherein said controlling the first vehicle to follow the first target vehicle to travel according to the parking path and the first ambient information comprises:
determining whether the first vehicle is traveling in a designated lane when the distance between the first vehicle position and the parking area position is less than or equal to a fourth preset distance; and
when the first vehicle travels in the designated lane, controlling the first vehicle to continue to follow the first target vehicle and controlling the first vehicle to decelerate to a first preset speed.

5. The method according to claim 4, further comprising, after said determining whether the first vehicle is traveling in a designated lane when the distance between the first vehicle position and the parking area position is less than or equal to a fourth preset distance:
acquiring a third vehicle position of the second vehicle, and determining the second vehicle as a second target vehicle when the first vehicle is not traveling in the designated lane; and
acquiring second ambient information of the second target vehicle, and controlling the first vehicle to follow the second target vehicle to gradually change to the designated lane and controlling the first vehicle to decelerate to a first preset speed based on the first vehicle position, the third vehicle position and the second ambient information.

6. The method according to claim 1, further comprising, after said determining the second vehicle as a first target vehicle when the second vehicle position of the second vehicle is acquired:
controlling the first vehicle to continue traveling for preset time when the second vehicle position of the second vehicle is not acquired;
determining the second vehicle as the first target vehicle when the second vehicle position of the second vehicle is acquired within the preset time; and
controlling the first vehicle to park when the second vehicle position of the second vehicle is not acquired within the preset time.

7. A vehicle control device, comprising:
a vehicle position acquisition module (601), configured to acquire, after a sensing system of a first vehicle fails while the first vehicle is autonomously driven on an expressway, a first vehicle position of the first vehicle and a second vehicle position of a second vehicle adjacent the first vehicle;
a parking path determination module (602), configured to determine a parking path according to the first vehicle position;
a first target vehicle determination module (603), configured to determine the second vehicle as a first target vehicle when the second vehicle position of the second vehicle is acquired;
an ambient information acquisition module (604), configured to acquire first ambient information of the first target vehicle; and
a first target vehicle following module (605), configured to control the first vehicle to follow the first target vehicle to travel according to the parking path and the first ambient information;
wherein the parking path determination module is further configured to:
acquire a parking area position closest to the first vehicle and an expressway exit position;
determine whether a distance between the first vehicle position and the parking area position is greater than or equal to a distance between the first vehicle position and the expressway exit position;
acquire an original navigation path as the parking path when the distance between the first vehicle position and the parking area position is greater than or equal to the distance between the first vehicle position and the expressway exit position; and
plan the parking path between the first vehicle position and the parking area position when the distance between the first vehicle position and the parking area position is less than the distance between the first vehicle position and the expressway exit position.

8. The vehicle control device of claim 7, wherein the first target vehicle determination module is further configured to:
determine the second vehicle as the first target vehicle, when the second vehicle position of the second vehicle is acquired within a first preset distance in front of the first vehicle in the same lane;
if the second vehicle position of the second vehicle is not successfully acquired within the first preset distance in front of the first vehicle in the same lane, determine the second vehicle as the first target vehicle, when the second vehicle position of the second vehicle is acquired within a second preset distance in a lane adjacent to that of the first vehicle; and
if the second vehicle position of the second vehicle is not successfully acquired within the second preset distance in a lane adjacent to that of the first vehicle, determine the second vehicle as the first target vehicle, when the second vehicle position of the second vehicle is acquired within a third preset distance behind the first vehicle in the same lane.

9. The vehicle control device of claim 7, wherein the first target vehicle following module is further configured to:
determine whether there is an obstacle in front of the first vehicle based on the first ambient information;
plan an avoidance path for the first vehicle to avoid the obstacle, and control the first vehicle to avoid the obstacle according to the avoidance path when there is an obstacle in front of the first vehicle; and
take a traveling track of the first target vehicle as an avoidance path, and control the first vehicle to avoid the obstacle according to the avoidance path when said planning fails.

10. The vehicle control device of claim 7, wherein the first target vehicle following module is further configured to:
determine whether the first vehicle is traveling in a designated lane when the distance between the first vehicle position and the parking area position is less than or equal to a fourth preset distance; and
when the first vehicle travels in the designated lane, control the first vehicle to continue to follow the first target vehicle and control the first vehicle to decelerate to a first preset speed.

11. The vehicle control device of claim 10, further comprising:
means for acquiring a third vehicle position of the second vehicle and determining the second vehicle as a second target vehicle when the first vehicle is not traveling in the designated lane; and
means for acquiring second ambient information of the second target vehicle, controlling the first vehicle to follow the second target vehicle to gradually change to the designated lane, and controlling the first vehicle to decelerate to a first preset speed based on the first vehicle position, the third vehicle position and the second ambient information.

12. A vehicle, comprising a processor and memory, the memory comprising a computer program stored thereon which, when executed by the processor, results in performance of the steps of the vehicle control method of any one of claims 1 to 6.

13. A computer readable storage medium, comprising a computer program which, when executed by a processor, results in performance of the steps of the vehicle control method of any one of claims 1 to 6.

## Patentansprüche

1. Fahrzeugsteuerverfahren nach einem Ausfall eines Sensorsystems eines ersten Fahrzeugs, während das erste Fahrzeug autonom auf einer Schnellstraße gefahren wird, das Folgendes beinhaltet:
Erfassen (101, 201) einer ersten Fahrzeugposition des ersten Fahrzeugs und einer zweiten Fahrzeugposition eines zweiten Fahrzeugs neben dem ersten Fahrzeug;
Bestimmen (102, 202) einer Einparkroute gemäß der ersten Fahrzeugposition;
Bestimmen (103) des zweiten Fahrzeugs als ein erstes Zielfahrzeug, wenn die zweite Fahrzeugposition des zweiten Fahrzeugs erfasst wird;
Erfassen (104, 206) erster Umgebungsinformationen des ersten Zielfahrzeugs; und
Steuern (105, 207) des ersten Fahrzeugs, so dass es dem ersten Zielfahrzeug folgt, um gemäß der Einparkroute und den ersten Umgebungsinformationen zu fahren;
wobei das genannte Bestimmen einer Einparkroute gemäß der ersten Fahrzeugposition Folgendes beinhaltet:
Erfassen einer Parkplatzposition, die dem ersten Fahrzeug am nächsten liegt, und einer Schnellstraßenausfahrtposition;
Feststellen, ob ein Abstand zwischen der ersten Fahrzeugposition und der Parkplatzposition so groß wie oder größer als ein Abstand zwischen der ersten Fahrzeugposition und der Schnellstraßenausfahrtposition ist;
Erfassen einer ursprünglichen Navigationsroute als die Einparkroute, wenn der Abstand zwischen der ersten Fahrzeugposition und der Parkplatzposition so groß wie oder größer als der Abstand zwischen der ersten Fahrzeugposition und der Schnellstraßenausfahrtposition ist; und
Planen der Einparkroute zwischen der ersten Fahrzeugposition und der Parkplatzposition, wenn der Abstand zwischen der ersten Fahrzeugposition und der Parkplatzposition kleiner ist als der Abstand zwischen der ersten Fahrzeugposition und der Schnellstraßenausfahrtposition.

2. Verfahren nach Anspruch 1, wobei das genannte Bestimmen (103) des zweiten Fahrzeugs als ein erstes Zielfahrzeug, wenn die zweite Fahrzeugposition des zweiten Fahrzeugs erfasst wird, Folgendes beinhaltet:
Bestimmen (203) des zweiten Fahrzeugs als das erste Zielfahrzeug, wenn die zweite Fahrzeugposition des zweiten Fahrzeugs innerhalb eines ersten voreingestellten Abstands vor dem ersten Fahrzeug in derselben Fahrspur erfasst wird;
Bestimmen (204), wenn die zweite Fahrzeugposition des zweiten Fahrzeugs nicht erfolgreich innerhalb des ersten voreingestellten Abstands vor dem ersten Fahrzeug in derselben Fahrspur erfasst wird, des zweiten Fahrzeugs als das erste Zielfahrzeug, wenn die zweite Fahrzeugposition des zweiten Fahrzeugs innerhalb eines zweiten voreingestellten Abstands in einer Fahrspur neben der des ersten Fahrzeugs erfasst wird; und
Bestimmen (205), wenn die zweite Fahrzeugposition des zweiten Fahrzeugs nicht erfolgreich innerhalb des zweiten voreingestellten Abstands in einer Fahrspur neben der des ersten Fahrzeugs erfasst wird, des zweiten Fahrzeugs als das erste Zielfahrzeug, wenn die zweite Fahrzeugposition des zweiten Fahrzeugs innerhalb eines dritten voreingestellten Abstands hinter dem ersten Fahrzeug in derselben Fahrspur erfasst wird.

3. Verfahren nach Anspruch 1, wobei das genannte Steuern des ersten Fahrzeugs so, dass es dem ersten Zielfahrzeug folgt, um gemäß der Einparkroute und den ersten Umgebungsinformationen zu fahren, Folgendes beinhaltet:
Feststellen, ob sich vor dem ersten Fahrzeug ein Hindernis befindet, auf der Basis der ersten Umgebungsinformationen;
Planen einer Ausweichroute für das erste Fahrzeug, um dem Hindernis auszuweichen, und Steuern des ersten Fahrzeugs so, dass es dem Hindernis gemäß der Ausweichroute ausweicht, wenn sich ein Hindernis vor dem ersten Fahrzeug befindet; und
Nehmen eines Fahrwegs des ersten Zielfahrzeugs als Ausweichroute und Steuern des ersten Fahrzeugs so, dass es dem Hindernis gemäß der Ausweichroute ausweicht, wenn die genannte Planung erfolglos ist.

4. Verfahren nach Anspruch 1, wobei das genannte Steuern des ersten Fahrzeugs so, dass es dem ersten Zielfahrzeug folgt, um gemäß der Einparkroute und den ersten Umgebungsinformationen zu fahren, Folgendes beinhaltet:
Feststellen, ob das erste Fahrzeug in einer designierten Fahrspur fährt, wenn der Abstand zwischen der ersten Fahrzeugposition und der Parkplatzposition so groß wie oder kleiner als ein vierter voreingestellter Abstand ist; und
Steuern, wenn das erste Fahrzeug in der designierten Fahrspur fährt, des ersten Fahrzeugs so, dass es dem ersten Zielfahrzeug weiterhin folgt, und Steuern des ersten Fahrzeugs so, dass es auf eine erste voreingestellte Geschwindigkeit verlangsamt.

5. Verfahren nach Anspruch 4, das ferner nach dem genannten Feststellen, ob das erste Fahrzeug in einer designierten Fahrspur fährt, wenn der Abstand zwischen der ersten Fahrzeugposition und der Parkplatzposition so groß wie oder kleiner als ein vierter voreingestellter Abstand ist, Folgendes beinhaltet:
Erfassen einer dritten Fahrzeugposition des zweiten Fahrzeugs und Bestimmen des zweiten Fahrzeugs als ein zweites Zielfahrzeug, wenn das erste Fahrzeug nicht in der designierten Fahrspur fährt; und
Erfassen zweiter Umgebungsinformationen des zweiten Zielfahrzeugs und Steuern des ersten Fahrzeugs so, dass es dem zweiten Zielfahrzeug folgt, um allmählich auf die designierte Fahrspur zu wechseln, und Steuern des ersten Fahrzeugs so, dass es auf eine erste voreingestellte Geschwindigkeit verlangsamt, auf der Basis der ersten Fahrzeugposition, der dritten Fahrzeugposition und der zweiten Umgebungsinformationen.

6. Verfahren nach Anspruch 1, das ferner nach dem genannten Bestimmen des zweiten Fahrzeugs als ein erstes Zielfahrzeug, wenn die zweite Fahrzeugposition des zweiten Fahrzeugs erfasst wird, Folgendes beinhaltet:
Steuern des ersten Fahrzeugs so, dass es die Fahrt für eine voreingestellte Zeit fortsetzt, wenn die zweite Fahrzeugposition des zweiten Fahrzeugs nicht erfasst wird;
Bestimmen des zweiten Fahrzeugs als das erste Zielfahrzeug, wenn die zweite Fahrzeugposition des zweiten Fahrzeugs innerhalb der voreingestellten Zeit erfasst wird; und
Steuern des ersten Fahrzeugs so, dass es einparkt, wenn die zweite Fahrzeugposition des zweiten Fahrzeugs nicht innerhalb der voreingestellten Zeit erfasst wird.

7. Fahrzeugsteuervorrichtung, die Folgendes umfasst:
ein Fahrzeugpositionserfassungsmodul (601), konfiguriert zum Erfassen, nach dem Ausfall eines Sensorsystem eines ersten Fahrzeugs, während das erste Fahrzeug autonom auf einer Schnellstraße gefahren wird, einer ersten Fahrzeugposition des ersten Fahrzeugs und einer zweiten Fahrzeugposition eines zweiten Fahrzeugs neben dem ersten Fahrzeug;
ein Einparkroutenbestimmungsmodul (602), konfiguriert zum Bestimmen einer Einparkroute gemäß der ersten Fahrzeugposition;
ein Erstes-Zielfahrzeug-Bestimmungsmodul (603), konfiguriert zum Bestimmen des zweiten Fahrzeugs als ein erstes Zielfahrzeug, wenn die zweite Fahrzeugposition des zweiten Fahrzeugs erfasst wird;
ein Umgebungsinformationserfassungsmodul (604), konfiguriert zum Erfassen erster Umgebungsinformationen des ersten Zielfahrzeugs; und
ein Erstes-Zielfahrzeug-Verfolgungsmodul (605), konfiguriert zum Steuern des ersten Fahrzeugs so, dass es dem ersten Zielfahrzeug folgt, um gemäß der Einparkroute und den ersten Umgebungsinformationen zu fahren;
wobei das Einparkroutenbestimmungsmodul ferner konfiguriert ist zum:
Erfassen einer Parkplatzposition, die dem ersten Fahrzeug am nächsten liegt, und einer Schnellstraßenausfahrtposition;
Feststellen, ob ein Abstand zwischen der ersten Fahrzeugposition und der Parkplatzposition so groß wie oder größer als ein Abstand zwischen der ersten Fahrzeugposition und der Schnellstraßenausfahrtposition ist;
Erfassen einer ursprünglichen Navigationsroute als die Einparkroute, wenn der Abstand zwischen der ersten Fahrzeugposition und der Parkplatzposition so groß wie oder größer als der Abstand zwischen der ersten Fahrzeugposition und der Schnellstraßenausfahrtposition ist; und
Planen der Einparkroute zwischen der ersten Fahrzeugposition und der Parkplatzposition, wenn der Abstand zwischen der ersten Fahrzeugposition und der Parkplatzposition kleiner ist als der Abstand zwischen der ersten Fahrzeugposition und der Schnellstraßenausfahrtposition.

8. Fahrzeugsteuervorrichtung nach Anspruch 7, wobei das Erstes-Zielfahrzeug-Bestimmungsmodul ferner konfiguriert ist zum:
Bestimmen des zweiten Fahrzeugs als das erste Zielfahrzeug, wenn die zweite Fahrzeugposition des zweiten Fahrzeugs innerhalb eines ersten voreingestellten Abstands vor dem ersten Fahrzeug in derselben Fahrspur erfasst wird;
Bestimmen, wenn die zweite Fahrzeugposition des zweiten Fahrzeugs nicht erfolgreich innerhalb des ersten voreingestellten Abstands vor dem ersten Fahrzeug in derselben Fahrspur erfasst wird, des zweiten Fahrzeugs als das erste Zielfahrzeug, wenn die zweite Fahrzeugposition des zweiten Fahrzeugs innerhalb eines zweiten voreingestellten Abstands in einer Fahrspur neben der des ersten Fahrzeugs erfasst wird; und
Bestimmen, wenn die zweite Fahrzeugposition des zweiten Fahrzeugs nicht erfolgreich innerhalb des zweiten voreingestellten Abstands in einer Fahrspur neben der des ersten Fahrzeugs erfasst wird, des zweiten Fahrzeugs als das erste Zielfahrzeug, wenn die zweite Fahrzeugposition des zweiten Fahrzeugs innerhalb eines dritten voreingestellten Abstands hinter dem ersten Fahrzeug in derselben Fahrspur erfasst wird.

9. Fahrzeugsteuervorrichtung nach Anspruch 7, wobei das Erstes-Zielfahrzeug-Verfolgungsmodul ferner konfiguriert ist zum:
Feststellen, ob sich vor dem ersten Fahrzeug ein Hindernis befindet, auf der Basis der ersten Umgebungsinformationen;
Planen einer Ausweichroute für das erste Fahrzeug, um dem Hindernis auszuweichen, und Steuern des ersten Fahrzeugs so, dass es dem Hindernis gemäß der Ausweichroute ausweicht, wenn sich ein Hindernis vor dem ersten Fahrzeug befindet; und
Nehmen eines Fahrwegs des ersten Zielfahrzeugs als Ausweichroute und Steuern des ersten Fahrzeugs so, dass es dem Hindernis gemäß der Ausweichroute ausweicht, wenn die genannte Planung erfolglos ist.

10. Fahrzeugsteuervorrichtung nach Anspruch 7, wobei das Erstes-Zielfahrzeug-Verfolgungsmodul ferner konfiguriert ist zum:
Feststellen, ob das erste Fahrzeug in einer designierten Fahrspur fährt, wenn der Abstand zwischen der ersten Fahrzeugposition und der Parkplatzposition so groß wie oder kleiner als ein vierter voreingestellter Abstand ist; und
Steuern, wenn das erste Fahrzeug in der designierten Fahrspur fährt, des ersten Fahrzeugs so, dass es dem ersten Zielfahrzeug weiterhin folgt, und Steuern des ersten Fahrzeugs so, dass es auf eine erste voreingestellte Geschwindigkeit verlangsamt.

11. Fahrzeugsteuervorrichtung nach Anspruch 10, die ferner Folgendes umfasst:
Mittel zum Erfassen einer dritten Fahrzeugposition des zweiten Fahrzeugs und zum Bestimmen des zweiten Fahrzeugs als ein zweites Zielfahrzeug, wenn das erste Fahrzeug nicht in der designierten Fahrspur fährt; und
Mittel zum Erfassen zweiter Umgebungsinformationen des zweiten Zielfahrzeugs, zum Steuern des ersten Fahrzeugs so, dass es dem zweiten Zielfahrzeug folgt, um allmählich auf die designierte Fahrspur zu wechseln, und zum Steuern des ersten Fahrzeugs so, dass es auf eine erste voreingestellte Geschwindigkeit verlangsamt, auf der Basis der ersten Fahrzeugposition, der dritten Fahrzeugposition und der zweiten Umgebungsinformationen.

12. Fahrzeug, das einen Prozessor und einen Speicher umfasst, wobei der Speicher ein darauf gespeichertes Computerprogramm umfasst, das bei Ausführung durch den Prozessor die Durchführung der Schritte des Fahrzeugsteuerverfahrens nach einem der Ansprüche 1 bis 6 bewirkt.

13. Computerlesbares Speichermedium, das ein Computerprogramm umfasst, das bei Ausführung durch einen Prozessor die Durchführung der Schritte des Fahrzeugsteuerverfahrens nach einem der Ansprüche 1 bis 6 bewirkt.

## Revendications

1. Procédé de commande de véhicule après la défaillance d'un système de détection d'un premier véhicule tandis que le premier véhicule est conduit de manière autonome sur une autoroute, comprenant :
une acquisition (101, 201) d'une première position de véhicule du premier véhicule et d'une deuxième position de véhicule d'un second véhicule adjacent au premier véhicule ;
une détermination (102, 202) d'un trajet de stationnement selon la première position de véhicule ;
une détermination (103) du second véhicule à titre de premier véhicule cible lorsque la deuxième position de véhicule du second véhicule est acquise ;
une acquisition (104, 206) de premières informations ambiantes du premier véhicule cible ; et
une commande (105, 207) du premier véhicule pour qu'il suive le premier véhicule cible pour se déplacer selon le trajet de stationnement et les premières informations ambiantes ;
dans lequel ladite détermination d'un trajet de stationnement selon la première position de véhicule comprend :
une acquisition d'une position de zone de stationnement la plus proche du premier véhicule et d'une position de sortie d'autoroute ;
une détermination du fait qu'une distance entre la première position de véhicule et la position de zone de stationnement est supérieure ou égale à une distance entre la première position de véhicule et la position de sortie d'autoroute ;
une acquisition d'un trajet de navigation d'origine à titre de trajet de stationnement lorsque la distance entre la première position de véhicule et la position de zone de stationnement est supérieure ou égale à la distance entre la première position de véhicule et la position de sortie d'autoroute ; et
une planification du trajet de stationnement entre la première position de véhicule et la position de zone de stationnement lorsque la distance entre la première position de véhicule et la position de zone de stationnement est inférieure à la distance entre la première position de véhicule et la position de sortie d'autoroute.

2. Procédé selon la revendication 1, dans lequel ladite détermination (103) du second véhicule à titre de premier véhicule cible lorsque la deuxième position de véhicule du second véhicule est acquise comprend :
une détermination (203) du second véhicule à titre de premier véhicule cible, lorsque la deuxième position de véhicule du second véhicule est acquise au sein d'une première distance prédéfinie devant le premier véhicule dans la même voie ;
si la deuxième position de véhicule du second véhicule n'est pas acquise avec succès au sein de la première distance prédéfinie devant le premier véhicule dans la même voie, une détermination (204) du second véhicule à titre de premier véhicule cible, lorsque la deuxième position de véhicule du second véhicule est acquise au sein d'une deuxième distance prédéfinie dans une voie adjacente à celle du premier véhicule ; et
si la deuxième position de véhicule du second véhicule n'est pas acquise avec succès au sein de la deuxième distance prédéfinie dans une voie adjacente à celle du premier véhicule, une détermination (205) du second véhicule à titre de premier véhicule cible, lorsque la deuxième position de véhicule du second véhicule est acquise au sein d'une troisième distance prédéfinie derrière le premier véhicule dans la même voie.

3. Procédé selon la revendication 1, dans lequel ladite commande du premier véhicule pour qu'il suive le premier véhicule cible pour se déplacer selon le trajet de stationnement et les premières informations ambiantes comprend :
une détermination du fait qu'il y a un obstacle devant le premier véhicule sur la base des premières informations ambiantes ;
une planification d'un trajet d'évitement pour que le premier véhicule évite l'obstacle, et une commande du premier véhicule pour qu'il évite l'obstacle selon le trajet d'évitement lorsqu'il y a un obstacle devant le premier véhicule ; et
le fait d'emprunter un trajet de déplacement du premier véhicule cible à titre de trajet d'évitement, et une commande du premier véhicule pour qu'il évite l'obstacle selon le trajet d'évitement lorsque ladite planification échoue.

4. Procédé selon la revendication 1, dans lequel ladite commande du premier véhicule pour qu'il suive le premier véhicule cible pour se déplacer selon le trajet de stationnement et les premières informations ambiantes comprend :
une détermination du fait que le premier véhicule se déplace dans une voie désignée lorsque la distance entre la première position de véhicule et la position de zone de stationnement est inférieure ou égale à une quatrième distance prédéfinie ; et
lorsque le premier véhicule se déplace dans la voie désignée, une commande du premier véhicule pour qu'il continue à suivre le premier véhicule cible et une commande du premier véhicule pour qu'il décélère à une première vitesse prédéfinie.

5. Procédé selon la revendication 4, comprenant en outre, après ladite détermination du fait que le premier véhicule se déplace dans une voie désignée lorsque la distance entre la première position de véhicule et la position de zone de stationnement est inférieure ou égale à une quatrième distance prédéfinie :
une acquisition d'une troisième position de véhicule du second véhicule, et une détermination du second véhicule à titre de second véhicule cible lorsque le premier véhicule ne se déplace pas dans la voie désignée ; et
une acquisition de secondes informations ambiantes du second véhicule cible, et une commande du premier véhicule pour qu'il suive le second véhicule cible pour passer graduellement vers la voie désignée et une commande du premier véhicule pour qu'il décélère à une première vitesse prédéfinie sur la base de la première position de véhicule, de la troisième position de véhicule et des secondes informations ambiantes.

6. Procédé selon la revendication 1, comprenant en outre, après ladite détermination du second véhicule à titre de premier véhicule cible lorsque la deuxième position de véhicule du second véhicule est acquise :
une commande du premier véhicule pour qu'il continue à se déplacer pendant un temps prédéfini lorsque la deuxième position de véhicule du second véhicule n'est pas acquise ;
une détermination du second véhicule à titre de premier véhicule cible lorsque la deuxième position de véhicule du second véhicule est acquise dans le temps prédéfini ; et
une commande du premier véhicule pour qu'il se mette en stationnement lorsque la deuxième position de véhicule du second véhicule n'est pas acquise dans le temps prédéfini.

7. Dispositif de commande de véhicule, comprenant :
un module d'acquisition de position de véhicule (601), configuré pour acquérir, après la défaillance d'un système de détection d'un premier véhicule tandis que le premier véhicule est en conduit de manière autonome sur une autoroute, une première position de véhicule du premier véhicule et une deuxième position de véhicule d'un second véhicule adjacent au premier véhicule ;
un module de détermination de trajet de stationnement (602), configuré pour déterminer un trajet de stationnement selon la première position de véhicule ;
un module de détermination de premier véhicule cible (603), configuré pour déterminer le second véhicule à titre de premier véhicule cible lorsque la deuxième position de véhicule du second véhicule est acquise ;
un module d'acquisition d'informations ambiantes (604), configuré pour acquérir de premières informations ambiantes du premier véhicule cible ; et
un premier module de suivi de premier véhicule cible (605), configuré pour commander le premier véhicule pour qu'il suive le premier véhicule cible pour se déplacer selon le trajet de stationnement et les premières informations ambiantes ;
dans lequel le module de détermination de trajet de stationnement est en outre configuré pour :
acquérir une position de zone de stationnement la plus proche du premier véhicule et une position de sortie d'autoroute ;
déterminer le fait qu'une distance entre la première position de véhicule et la position de zone de stationnement est supérieure ou égale à une distance entre la première position de véhicule et la position de sortie d'autoroute ;
acquérir un trajet de navigation d'origine à titre de trajet de stationnement lorsque la distance entre la première position de véhicule et la position de zone de stationnement est supérieure ou égale à la distance entre la première position de véhicule et la position de sortie d'autoroute ; et
planifier le trajet de stationnement entre la première position de véhicule et la position de zone de stationnement lorsque la distance entre la première position de véhicule et la position de zone de stationnement est inférieure à la distance entre la première position de véhicule et la position de sortie d'autoroute.

8. Dispositif de commande de véhicule selon la revendication 7, dans lequel le module de détermination de premier véhicule cible est en outre configuré pour :
déterminer le second véhicule à titre de premier véhicule cible, lorsque la deuxième position de véhicule du second véhicule est acquise au sein d'une première distance prédéfinie devant le premier véhicule dans la même voie ;
si la deuxième position de véhicule du second véhicule n'est pas acquise avec succès au sein de la première distance prédéfinie devant le premier véhicule dans la même voie, déterminer le second véhicule à titre de premier véhicule cible, lorsque la deuxième position de véhicule du second véhicule est acquise au sein d'une deuxième distance prédéfinie dans une voie adjacente à celle du premier véhicule ; et
si la deuxième position de véhicule du second véhicule n'est pas acquise avec succès au sein de la deuxième distance prédéfinie dans une voie adjacente à celle du premier véhicule,
déterminer le second véhicule à titre de premier véhicule cible, lorsque la deuxième position de véhicule du second véhicule est acquise au sein d'une troisième distance prédéfinie derrière le premier véhicule dans la même voie.

9. Dispositif de commande de véhicule selon la revendication 7, dans lequel le module de suivi de premier véhicule cible est en outre configuré pour :
déterminer le fait qu'il y a un obstacle devant le premier véhicule sur la base des premières informations ambiantes ;
planifier un trajet d'évitement pour que le premier véhicule évite l'obstacle, et commander le premier véhicule pour qu'il évite l'obstacle selon le trajet d'évitement lorsqu'il y a un obstacle devant le premier véhicule ; et
emprunter un trajet de déplacement du premier véhicule cible à titre de trajet d'évitement, et commander le premier véhicule pour qu'il évite l'obstacle selon le trajet d'évitement lorsque ladite planification échoue.

10. Dispositif de commande de véhicule selon la revendication 7, dans lequel le module de suivi de premier véhicule cible est en outre configuré pour :
déterminer le fait que le premier véhicule se déplace dans une voie désignée lorsque la distance entre la première position de véhicule et la position de zone de stationnement est inférieure ou égale à une quatrième distance prédéfinie ; et
lorsque le premier véhicule se déplace dans la voie désignée, commander le premier véhicule pour qu'il continue à suivre le premier véhicule cible et commander le premier véhicule pour qu'il décélère à une première vitesse prédéfinie.

11. Dispositif de commande de véhicule selon la revendication 10, comprenant en outre :
un moyen d'acquisition d'une troisième position de véhicule du second véhicule, et de détermination du second véhicule à titre de second véhicule cible lorsque le premier véhicule ne se déplace pas dans la voie désignée ; et
un moyen d'acquisition de secondes informations ambiantes du second véhicule cible, et de commande du premier véhicule pour qu'il suive le second véhicule cible pour changer graduellement vers la voie désignée et de commande du premier véhicule pour qu'il décélère à une première vitesse prédéfinie sur la base de la première position de véhicule, de la troisième position de véhicule et des secondes informations ambiantes.

12. Véhicule, comprenant un processeur et une mémoire, la mémoire comprenant un programme informatique stocké dessus qui, lorsqu'il est exécuté par le processeur, résulte en la réalisation des étapes du procédé de commande de véhicule selon l'une quelconque des revendications 1 à 6.

13. Support de stockage lisible par ordinateur, comprenant un programme informatique qui, lorsqu'il est exécuté par un processeur, résulte en la réalisation des étapes du procédé de commande de véhicule selon l'une quelconque des revendications 1 à 6.
